## Europäisches Patentamt

## European Patent Office

## Office européen des brevets

(11) Veröffentlichungsnummer: **0 131 646**
**B1**

(12) **EUROPÄISCHE PATENTSCHRIFT**

(45) Veröffentlichungstag der Patentschrift:
**31.05.89**

(21) Anmeldenummer: **83107075.0**

(22) Anmeldetag: **19.07.83**

(51) Int. Cl.⁴: **A 01 J 5/08,** F 16 K 31/126

(54) Lufteinlassventil für den Einlass von Luft in die Milchabführleitung eines Melkbechers oder Sammelstücks.

(43) Veröffentlichungstag der Anmeldung:
**23.01.85 Patentblatt 85/4**

(45) Bekanntmachung des Hinweises auf die Patenterteilung:
**31.05.89 Patentblatt 89/22**

(84) Benannte Vertragsstaaten:
**AT BE CH DE FR GB IT LI NL SE**

(56) Entgegenhaltungen:
**DE-A-1 632 935**
**DE-A-2 046 276**
**FR-A-2 312 193**
**.FR-A-2 434 986**
**GB-A-552 186**

(73) Patentinhaber: **Biomelktechnik Hoefelmayr & Co.,
Steinwichslenstrasse 20, CH- 9052 NiederteufenAR
(CH)**

(72) Erfinder: **Hoefelmayr, Tilmann, Dr.,
Steinwichslenstrasse 20, CH- 9052 Niederteufen
AR (CH)**

(74) Vertreter: **Patentanwälte Grünecker, Dr.
Kinkeldey, Dr. Stockmair, Dr. Schumann,
Jakob, Dr. Bezold, Meister, Hilgers, Dr. Meyer-
Plath, Maximilianstrasse 58, D-8000 München 22
(DE)**

EP 0 131 646 B1

## Beschreibung

Die Erfindung betrifft ein Lufteinlaßventil für den Einlaß von Luft in die Milchabführleitung eines Melkbechers oder Sammelstücks, mit einem an dem Melkbecher oder Sammelstücks befestigten Gehäuse, in dem eine Membran eingespannt ist, an der ein nach einer Seite der Membran vorstehender Ventilteller befestigt ist, der mit einem Ventilsitz ein Ventil bildet, das in Abhängigkeit von dem auf der anderen Seite der Membran anliegenden Pulsatordruck periodisch öffnet und schließt, um im geöffneten Zustand über eine Verbindungsleitung atmosphärische Luft in die Milchabführleitung, insbesondere in den Innenraum eines Zitzengummis, einzuleiten.

Ein derartiges Lufteinlaßventil ist dem Verkehr bekannt und hat sich bisher hervorragend bewährt. Das Lufteinlaßventil selbst hat eine verhältnismäßig geringe Größe von etwa 5mm Membrandurchmesser. Seine einzelnen Teile sind unlösbar miteinander verbunden.

Aus der DE-PS-1 299 165 war bereits ein Lufteinlaßventil für einen Melkbecher bekannt, bei dem das Ventil selbst an dem Kopfteil des Zitzengummis befestigt ist und gestattet periodisch Luft unter Atmosphärendruck in den Kopfteil des Zitzengummis einzuleiten. In einer Ventilkammer, in die eine mit der Atmosphäre in Verbindung stehende Leitung, zweitens eine mit dem Pulsator in Verbindung stehende Leitung und drittens die in den Kopfraum des Zitzengummis führende Leitung münden, ist ein Ventilkörper, etwa in Form einer Kugel oder eines Zylinders vorgesehen. Diese Ventile wirken derart, daß, sobald ein entsprechender Unterdruck in der Pulsatorleitung erzeugt wird, der Ventilkörper gegen das Auslaßende der Pulsatorleitung entgegen der Schwerkraft gesaugt wird, in welcher Stellung der Ventilkörper gleichzeitig die Verbindungsleitung zum Kopfraum des Zitzengummis schließt.

Wenn der Unterdruck der Pulsatorleitung abgebaut wird, fällt schließlich der Ventilkörper aufgrund der Schwerkraft ab und gibt dadurch die zu dem Kopfraum des Zitzengummis führende Leitung frei, wodurch unter Atmosphärendruck stehende Luft über die mit der Außenseite des Ventils in Verbindung stehende Leitung in das Zitzengummi einströmen kann. Derartige Ventile arbeiten aufgrund der Trägheit dieser Ventilkörper verhältnismäßig schwerfällig ohne genau definierten Schließ- und öffnungszeitpunkt. Darüber hinaus kann die unter Atmosphärendruck stehende, in den Kopfteil des Zitzengummis eingeleitete Luft nicht ohne weiteres zur Ableitung des Milchkolbens unterhalb der Zitze wirksam werden, da die Zitze, wenigstens solange sie noch prall gefüllt ist, den Saugstutzen des Zitzengummis voll abschließt und einen Durchtritt dieser Luft wenigstens stark verzögert.

Aus der DE-OS-1 632 935 ist auch bereits ein Lufteinlaßventil bekannt, das als Ventilglied eine Membran aufweist, die auf der einen Seite mit der Atmosphärenluft in Verbindung steht und auf der anderen Seite über eine in die Fläche des Ventilsitzes mündende Leitung mit dem Pulsatorraum eines Melkbechers verbunden ist. Weiterhin steht die dem Pulsatorraum zugewandte Seite der Membran über eine weitere Verbindungsleitung mit dem Inneren des Kopfraumes eines Sitzengummis in Verbindung. Sobald sich im Inneren des Pulsatorraumes ein Unterdruck ausbildet, wird die Verbindung zwischen dem Pulsatorraum und dem Inneren des Kopfraumes des Zitzengummis unterbrochen. Steigt der Druck im Pulsatorraum an, so wird bei Erreichen des Atmosphärendrucks die Membran von ihrem Ventil abgehoben, so daß unter Atmosphärendruck stehende Luft vom Pulsatorraum aus über die Verbindungsleitung in den Kopfraum des Zitzengummis strömen kann. Derartige Ventile haben im wesentlichen dieselben Nachteile wie die bereits vorstehend genannten Ventile.

Aus der DE-OS-2 046 276 ist auch bereits ein Membranlufteinlaßventil bekannt geworden, dessen eine Seite mit dem Pulsatorraum eines Melkbechers in Verbindung steht, während an der anderen Seite der Membran ein Ventilteller befestigt ist, der in Abhängigkeit von der Lage der Membran die Zufuhr von Atmosphärenluft von der Außenseite des Melkbechers über eine mit dem Kopfraum des Zitzengummis in Verbindung stehende Leitung öffnen oder schließen kann.

Aus der US-PS-3 255 732 ist auch bereits ein Lufteinlaßventil bekannt, bei dem eine Luftzuführleitung durch den Melkbecher unmittelbar mit dem Saugstutzen des Zitzengummis unterhalb der Zitze in Verbindung steht. Diese Lufteinlaßleitung kann über ein Membranventil, das in Abhängigkeit vom Pulsatordruck gesteuert wird, entweder verschlossen werden oder mit der Atmosphärenluft verbunden werden. Die Steuerung erfolgt jedoch so, daß bei Vorhandensein eines Unterdrucks in dem Pulsator Atmosphärenluft in den Saugstutzen des Zitzengummis eingeleitet wird, während bei Vorliegen von Atmosphärendruck am Pulsator die Verbindungsleitung geschlossen und damit der Zutritt von Atmosphärenluft in den Saugstutzen des Zitzengummis unterbunden ist. Atmosphärenluft wird damit immer zu Beginn und während des Saugtaktes in den Saugstutzen des Zitzengummis eingeleitet.

Aus der DE-PS-1 274 847 ist auch bereits ein Lufteinlaßventil bekannt, bei dem am unteren Ende des Melkbechers ein Klemmstück zum Festklemmen des unteren Endes des Saugstutzens des Zitzengummis vorgesehen wird, das in Form einer Hausgiebelfläche ausgebildet ist. In den schräg nach abwärts geneigten, einander gegenüberliegenden Flächen dieses Giebelteils sind Öffnungen vorgesehen, die mit der Milchabflußleitung in Verbindung stehen. Diese Öffnungen werden durch den Zitzengummi dann verschlossen, wenn sich der Zitzengummi im kollabierten Zustand befindet, d.h., wenn in der Pulsatorleitung ein etwas höherer Druck als in der Milchabführleitung herrscht. In diesem Zustand werden jedoch an den seitlichen Stirnwänden des Klemmstückes befindliche Öffnungen von dem kollabierten Zitzengummi freigegeben und diese Öffnungen stehen mit der Außenseite, d.h., Luft unter Atmosphärendruck, in Verbindung. In diesem Zustand wird also atmosphärische Luft in den Teil des Saugstutzens unterhalb der Zitze eingeführt. Wird der Zitzengummi während der Saugphase, d.h., wenn der Pulsatordruck etwa gleich dem Melkvakuum ist, wieder in seinen röhrenförmigen Zustand zurückgebracht, so werden die Milchabflußleitungen in dem Klemmstück freigegeben, während die Öffnungen, die mit der Außenseite in Verbindung stehen, verschlossen werden. Ein derartiges Ventil weist jedoch den Nachteil auf, daß die gesamte Steuerung von der Zitzengummibewegung abhängig ist. Das führt jedoch dazu, daß sich die Steuerzeit in Abhängigkeit von dem Milchfluß stark verschieben kann. So verschieben sich die Steuerzeiten bei geringen Milchflüssen zu längeren Steuerzeiten hin, während bei größeren Milchflüssen kürzere Steuerzeiten auftreten. Weiterhin arbeitet ein solches Ventil nicht schlagartig, was eine wesentliche Voraussetzung für eine Optimierung des Melkzyklus ist, sondern es schließt und öffnet langsam. Weitere, ungewollte Änderungen der Steuerzeit ergeben sich zwangsläufig mit der Zeit durch eine Alterung des Gummis, bei der dieser seine Elastizität verliert.

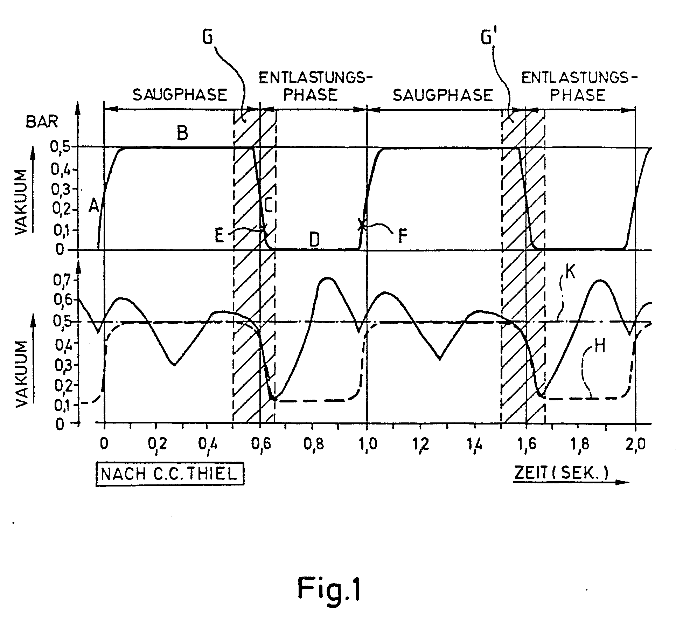

Ein abgewandeltes Ventil der vorstehenden Art ist durch das DE-GM-8 015 963.3 bekannt geworden. Im Unterschied zu dem vorstehend genannten Ventil werden hierbei lediglich die Öffnungen periodisch geöffnet und geschlossen, die mit der Außenseite des Melkbechers, d.h. mit atmosphärischer Luft, in Verbindung stehen. Dagegen bleibt die Verbindung des Raumes unterhalb der Zitze mit der Milchabführleitung ständig geöffnet, so daß die Milch kontinuierlich abfließen kann. Die o.g. Ventile haben neben den bereits erwähnten Nachteilen auch den Nachteil, daß jeweils Milch in die Lufteinlaßleitungen eintritt und daß insbesondere am Ende des Melkvorgangs die Gefahr besteht, daß sogar Reste der Milch in der Leitung verbleiben. Da die Leitungen sehr dünn sind, sind sie schwer zu reinigen und es tritt häufig der Fall ein, daß die Milch in den Lufteinlaßleitungen verkäst, ohne daß dies von dem Melker bemerkt wird. Wenn jedoch der Lufteinlaß blockiert oder beeinträchtigt ist, ergeben sich völlig unkontrollierte und biotechnisch äußerst unerwünschte Vakuumschwankungen an der Zitzenspitze, wie sie in der noch zu erläuternden Figur 1 dargestellt sind. Folglich besteht ein erhöhtes Bedürfnis an einem Ventil, das leicht saubergehalten werden kann, das aber darüber hinaus möglichst bereits derart funktioniert, daß es überhaupt nicht erst zu unerwünschten Milchrückständen im Ventil kommt. Ein solches Ventil sichert einerseits die notwendige Funktionstüchtigkeit unter allen praktischen Bedingungen und andererseits wird damit dem hohen Gebot der Sauberkeit auf dem Gebiet der Lebensmittelsherstellung entsprochen.

Ausgehend von einem Ventil der eingangs erwähnten Art, bei dem die Verbindungsleitung entsprechend einer bevorzugten Ausführungsform in Form einer Tropfnase in ein Schauglas unterhalb des Melkbechers mündet, wurde lange Zeit darüber gerätselt, wie es überhaupt in einer solchen nach oben verlaufenden Verbindungsleitung und ggf. auch in dem damit verbundenen höher gelegenen Ventil zu einer Ansammlung von Milchrückständen kommen kann. Zunächst wurde vermutet, daß dies darauf zurückzuführen sein könnte, daß das mit der Tropfnase versehene Ende der Verbindungsleitung ggf. aufgrund unsachgemäßer Installation nicht genau senkrecht zu dem Milchstrom sondern in einem geringen Winkel in Richtung des Milchstromes verlaufen könnte, so daß unmittelbar aufgrund der kinetischen Energie der Milch diese in die Verbindungsleitung getrieben würde. Es wurden deshalb Versuche unternommen, bei der das in den Milchstrom ragende Ende der Verbindungsleitung derart angeschrägt ist, daß die Schräge auf der von dem Milchstrom abgewandten Seite vorliegt. Eine solche Anordnung brachte jedoch keine Verbesserung.

Eine weitere Vermutung für die Ursache einer Verunreinigung des Ventils mit Milch bestand darin, daß dies auf folgendes Phänomen zurückzuführen sei. Wenn sich das Ventil am Ende der Entlastungsphase durch den Aufbau des Vakuums im Pulsraum gegen die Federkraft schließt, was schon bei ca. 10 kPa geschieht, baucht sich die elastische Gummimembran durch den weiter ansteigenden Unterdruck im Pulsraum, z. B. bis 45 kPa, gegen den Pulsraum hin aus, mit der Folge, daß sich das Volumen des Raumes zwischen dem bereits geschlossenen Ventilteller und der Membran vergrößert und somit eine Saugwirkung hervorruft. Zur Beseitigung der beschriebenen Saugwirkung wurden mit den verschiedensten Elastizitäten des Membranmaterials sowie mit Abstütztellern für die dem Pulsraum zugewandte Seite ausgiebige Versuche gemacht. Eine Verbesserung des Milchrücksaugens bis in das Ventil indessen konnte auch nicht andeutungsweise erreicht werden.

Mit Hilfe von Hochgeschwindigkeitsfilmaufnahmen, die zu einem ganz anderen Zweck, nämlich zur Erforschung des sogenannten Rückfluß- bzw. Rücksprays im Bereich der Zitzenspitze an einem durchsichtigen Zitzenbecher, gemacht wurden, ergab sich erstmals ein Hinweis dafür, daß die Milch am Ende der Saugphase kurz in die Verbindungsleitung zu dem Ventil und öfters auch bis in das Ventil selbst hineinschießt und ca 5 - 15 Millisekunden später schon wieder zurückfließt. Das schnelle Wiederzurückfließen der Milch durch die Verbindungsleitung wird ganz offensichtlich durch das Öffnen des Ventils zu Beginn der Entlastungsphase und den damit bewirkten Lufteintritt verursacht. Durch Verstellung des Lufteinlaßventils zu einem früheren öffnungszeitpunkt hin konnte eine merkliche Verringerung des Zurückfließens der Milch erreicht werden und bei einem besonders frühen Öffnen des Lufteinlaßventils konnte das Zurückfließen sogar ganz vermieden werden. Auf der anderen Seite bringt jedoch eine lange Ventilöffnungszeit insbesondere auch eine frühe Öffnungszeit eine nicht akzeptable Beeinträchtigung der Funktion des gesamten Systems des periodischen Lufteinlasses mit sich. Das vakuumtechnische biotechnische Optimum, das sehr ausgeprägt ist, liegt aber genau bei einer späten Öffnungszeit. Aus diesem Grunde konnte eine Vorverlegung der Öffnungszeit des Lufteinlaßventils keine Lösung des anstehenden Problems darstellen.

Wie ist nun das Zurückschießen von Milch in das Lufteinlaßventil überhaupt erklärbar? Blockiert man bei einem Melkzeug mit periodischem Lufteinlaß die vier Lufteinlaßventile im geschlossenen Zustand, so ergibt sich an der Zitzenspitze etwa der in Figur 1 der beiliegenden Zeichnung gezeigte Verlauf des Melkvakuums, der synchron mit dem entsprechenden Vakuumverlauf im Pulsraum dargestellt ist. Für die Aufklärung des Problems des Zurückfließens der Milch in der Lufteinlaßleitung ist der Verlauf der beiden Kurven (Zitzenende und Pulsraum) nur in den jeweils schraffierten Bereichen G und G' von Bedeutung. Im Bereichende B herrscht Saugphase. Das bedeutet, daß im Pulsraum Nennvakuum (hier $0,5 \times 10^5$ Pa) und an der Zitzenspitze etwa das gleiche Vakuum herrscht. D.h., daß auf die Zitzengummiwand keine nennenswerte Druckdifferenz wirkt, so daß das Zitzengummi also aufgrund seiner Elastizität offen steht. Das Vakuum unter der Zitzenspitze pflanzt sich fort über die Verbindungsleitung bis hinein in das Lufteinlaßventil. Wenn nun in der Phase C das Vakuum im Pulsraum schnell abgebaut wird, kollabiert dadurch das Zitzengummi und drückt den Strichkanal zu, so daß keine Milch mehr fließt. Das Kollabieren des Zitzengummis verkleinert aber auch den Raum unter der Zitzenspitze. Dieser Pumpwirkung kann die im Milchleitungssystem des Melkzeugs befindliche Milch aufgrund ihrer Massenträgheit aber nicht schnell genug durch beschleunigtes Abfließen folgen. D.h, es kommt zu einem kurzen Druckanstieg bzw. Unterdruckabfall, unterhalb der Zitzenspitze bis hin zu der Verbindungsleitung. Bezogen auf die Luftverbindungsleitung bedeutet dies, daß nun am ventilseitigen Leitungsende und im Ventil noch der hohe Unterdruck der Saugphase (ca. $0,5 \times 10^5$ Pa) herrscht, während am Tropfnasenende z. B. nur noch ein Unterdruck von $0,15 \times 10^5$ Pa herrscht. Befindet sich nun Milch im Bereich der Tropfnase, so wird diese Milch in Richtung des höheren Vakuums also zum Ventil gesaugt. Wie stark dieser Saugprozess ist, hängt von der Druckdifferenz und von dem Volumen der "Saugquelle", also vor allem vom Volumen des Ventilinnenraums bei geschlossenem Ventilteller ab. Will man also den Zurückfließeffekt grundsätzlich vermeiden, muß man das Volumen der "Saugquelle", so weit wie möglich vermindern oder am besten auf Null herabsetzen.

Der Forderung, den Ventilraum möglichst klein zu machen, stehen aber schwerwiegende andere Gründe entgegen. Zunächst besteht immer die Gefahr, daß Kuhhaare in den Ventilraum eintreten. Um auch in diesem Falle die Funktionsfähigkeit des Ventils zu erhalten, muß der Ventilraum entsprechend groß ausgebildet sein. Weiterhin ist zu bedenken, daß die Reinigung des gesamten Melkzeuges üblicherweise durch Durchleiten einer Reinigungsflüssigkeit erfolgt. In diesem Falle ist es schlecht, wenn in dem Strömungsverlauf kleine Räume vorhanden sind, da sich bekanntermaßen größere Räume mit diesem Verfahren besser reinigen lassen. Schließlich haben umfangreiche Untersuchungen im Labor und Kurz- und Langzeitversuche an einem großen Tiermaterial aller Rassen klar gezeigt, daß das Lufteinlaßventil gegen Ende der Belüftungsphase öffnen soll und am Anfang der Evakuierungsphase wieder schließen soll. Die Erreichung solcher Schaltzeiten hängt bei einem Tellerventil primär von der wirksamen Membranfläche, der Federkraft und - für die Öffnungszeit - von dem Verhältnis zwischen wirksamer Membranfläche und Ventiltellerfläche ab. Wird dieses Verhältnis mit 1 : 1 gewählt, so sind Öffnungsunterdruck und Schließunterdruck gleich und zwar unabhängig davon, welcher Unterdruck sich in der Geschlossenphase im Ventil zwischen Teller und Membran aufgebaut hat. Je kleiner man den Durchmesser des Ventiltellers im Verhältnis zum wirksamen Durchmesser der Membran macht, desto früher öffnet das Ventil, während der Ventilteller beim Schließen des Ventils keine Rolle spielt. Wäre der Ventilteller sehr klein und wird der Unterdruck in der Verbindungsleitung zu dem Lufteinlaßventil praktisch gleich dem Unterdruck im Pulsraum, so würde die Feder, die auf die Membran wirkt, das Ventil öffnen, da der auf den Ventilteller wirkende Druck (Schließdruck) wesentlich kleiner ist. Dies kann so weit führen, daß das Ventil in dem Augenblick, in dem es schließt, von selbst wieder aufspringt. Durch exakte Wahl des Ventiltellerdurchmessers im Verhältnis zu der Druckfeder und der wirksamen Membranfläche kann der Öffnungszeitpunkt ganz genau und unabhängig vom Schließzeitpunkt eingestellt werden. Insgesamt wird jedoch deutlich, daß der Ventilteller verhältnismäßig groß ausgebildet sein muß. Das bedeutet aber, daß sich die Dichtigkeit zwischen dem Ventilteller und dem Ventilsitz aufgrund der großen Dichtfläche und einer entsprechend kleinen Flächenpressung nur sehr schwer unter Praxisbedingungen, wegen der immer gegebenen Verschmutzungsgefahr, erreichen läßt. Die Teile müssen unter diesen Bedingungen sehr genau gefertigt sein, um eine Funktionstüchtigkeit über längere Zeit zu gewährleisten. Das Ventil als solches ist unter diesen Bedingungen sehr empfindlich. Schließlich entsteht zwischen dem Ventilteller und der Membran ein relativ großes Volumen, das Milch zurücksaugen kann. Dies aber gerade sollte nach Möglichkeit vermieden werden.

Zusammenfassend kann man sagen, daß Milch vornehmlich aufgrund der drei folgenden Vorgänge in das Lufteinlaßventil eindringen kann:

Hängt der Melkbecher nach dem Milchentzug nicht nach unten, wie es üblich ist, sondern befindet sich in einer gewissen Schräglage, so können aus dem Sammelstück oder dem kurzen Milchschlauch zurückfließende Milchreste - falls keine Tropfnase vorgesehen ist - in die Lufteinlaßleitung eindringen.

Auch bei einer sehr schlechten aber leider noch oft anzutreffenden Melkroutine kann dies der Fall sein. Bei dieser wird am Ende des Maschinenmelkens die Restmilch in den von der Zitze abgenommenen Becher von Hand hineingemolken. Dabei wird der kurze Milchschlauch zwischen Becher und Sammelstück meist abgeknickt. So staut sich die Milch im nicht mehr unter Vakuum stehenden Becher und läuft über die Lufteinlaßleitung und über das Ventil nach außen und verschmutzt so den Lufteinlaßtrakt, wenn nicht sofort mit Wasser gespült wird.

Schließlich kann, wie oben eingehend dargelegt wurde, während des normalen Melkvorgangs durch den Vakuumraum im Ventil Milch kurzzeitig in das Lufteinlaßventil gesaugt werden.

Der vorliegenden Erfindung liegt die Aufgabe zugrunde, ein Lufteinlaßventil der eingangs erwähnten Art anzugeben, das möglichst gut saubergehalten werden kann.

Dies wird ausgehend von einem Lufteinlaßventil der eingangserwähnten Art erfindungsgemäß dadurch erreicht, daß die Verbindungsleitung in die Ventilsitzfläche mündet. Auf diese Weise kann unabhängig davon, wie groß der Ventilraum zwischen Ventilteller und Membran ist, ein Eindringen von Milchspray in diesen Raum dadurch sicher verhindert werden, daß der Ventilteller selbst während der gesamten Schließzeit des Lufteinlaßventils die Verbindungsleitung geschlossen hält. Da unter diesen Umständen im Ventilraum selbst während der Zeit, während der im Pulsatorraum ein Unterdruck erzeugt wird, kein entsprechender Unterdruck erzeugt wird, da das Ende der Verbindungsleitung während dieser Zeit verschlossen ist, ändert sich der Druck zwischen der Außenseite des Ventils, d.h. Atmosphärendruck, und dem Ventilraum praktisch nicht. Bei diesem Ventiltyp kann also der Ventilraum nicht zu der eingangs beschriebenen Sauquelle angeschlossen werden. D.h., für die Ausbildung des Ventiltellers kommt es lediglich darauf an, daß eine gute Dichtheit zwischen dem Ventilteller und Ventilsitz um das Austrittsende der Verbindungsleitung herum erreicht wird. Vorzugsweise erfolgt deshalb die Ausbildung des Ventilsitzes derart, daß die Ventilsitzfläche lediglich durch die Schnittfläche der Verbindungsleitung gebildet wird. Aufgrund des Anliegens des Ventiltellers an dem Austrittsende der Verbindungsleitung wird aber im geschlossenen Zustand des Ventils eine zusätzliche Schließkraft auf das Ventil ausgeübt. Dadurch öffnet das Ventil zu einem späteren Zeitpunkt als es schließt. Die Verschiebung zwischen Öffnungs- und Schließzeitpunkt kann durch die Größe der Fläche variiert werden, mit der der Ventilteller gegen die Endfläche der Verbindungsleitung anliegt.

Aus der besonderen Ausgestaltung des Ventils ergeben sich verschiedene besondere Vorteile. Da der Ventilteller zweckmäßigerweise in Form eines Kegels ausgebildet ist, strömt das Reinigungswasser, das von der Verbindungsleitung her in das Lufteinlaßventil strömt, zunächst gegen die Unterseite des Kegels und wird an dieser nach abwärts gegen die Membran des Ventils hin umgelenkt. Dadurch ergibt sich eine verbesserte Reinigung der Membran und des gesamten Ventilhohlraumes. Ein weiterer Vorteil ist darin zu sehen, daß in der Schließstellung des Ventils durch den Ventilteller nur ein kleines Loch abgedeckt werden muß. Hierdurch entsteht einerseits eine hohe Flächenpressung und andererseits bekommt das Ventil ein schlagartiges Schließverhalten. Da nur eine kleine Öffnung abzudichten ist, ist das Ventil beim Anliegen des Ventiltellers an diese Öffnung auch unmittelbar dicht, d.h. geschlossen. Daraus folgt, daß eine noch definiertere und noch exaktere Steuerung des Ventils und dessen Zeiten möglich ist. Für die Lebensdauer des Ventils ist es weiterhin wichtig, daß der Ventilteller in Form des Ventilkegels jeweils eine Dichtung nur auf einer verhältnismäßig kleinen Fläche bewirken muß. Da der Ventilteller in sich drehbar ist, oder nach einem Herausnehmen des Ventiltellers, gelangt normalerweise immer wieder eine neue Fläche des Ventiltellers über die abzudeckende Öffnung. Dadurch wird ein Einschlagen des Ventilsitzes trotz der Verwendung eines weichen Gummis für den Ventilteller verhindert. Die Verwendung eines weichen Gummis ist aber für die Dichtigkeit des Ventils von großer Bedeutung.

Gemäß einer Zweckmäßigen Ausgestaltung wird der Ventilteller lösbar an der Membran gehalten. Hierdurch ist der Ventilteller leicht abnehmbar, so daß die Membran und der zwischen dem Ventilteller und der Membran liegende Ventilraum leicht zugänglich sind und besonders gründlich gerreinigt werden können. Als besonders zweckmäßig hat sich eine Anordnung ergeben, bei der der Ventilteller lösbar in einer an der Membran befestigten Schnapphalterung gehaltert ist.

Eine vorzugsweise Ausführungsform ist derart ausgebildet, daß die Schnapphalterung die Membran durchsetzt, daß in der Schnapphalterung eine Durchgangsöffnung ausgebildet ist, und daß ein mit dem Ventilteller in Verbindung stehender Stößel durch die Schnapphalterung auf die dem Pulsatorraum zugewandte Seite der Membran vorsteht. Der Ventilteller läßt sich auf diese Weise dadurch leicht herausnehmen, daß das gesamte Ventil mit seinem Gehäuse aus seiner Halterung an dem Melkbecher oder dem Sammelstück entfernt wird und der Ventilteller durch Druck auf der Stößel von der dem Pulsatorraum zugewandten Seite der Membran herausgedrückt wird.

Die Schnapp- oder Rasthalterung wird in einfacher Weise dadurch ausgebildet, daß an dem Stößel ein ringförmiger Einschnitt ausgebildet ist, in den im eingerasteten Zustand ein ringförmiger Vorsprung auf der Innenseite der Durchgangsöffnung eingreift.

Um das Einrasten und Ausrasten zu erleichtern, wird vorzugsweise der auf die Seite des Pulsatorraumes vorstehende rohrförmige Teil der Schnapphalterung zur Erhöhung der Flexibilität ein oder mehrere Male in axialer Richtung geschlitzt ausgebildet.

Da der Ventilteller zur besseren Erfüllung seiner Dichtfunktion vorzugsweise aus einem anderen Material, etwa Gummi, ausgebildet wird als der Stößel, wird zweckmäßigerweise der Ventilteller durch ein im wesentlichen kegelstumpfförmiges Teil gebildet, das axial von dem in Form eines Bolzens ausgebildeten Stößel durchsetzt ist.

Die Zugänglichkeit des Ventilraumes zwischen Ventilteller und Membran wird noch dadurch vergrößert, daß die Ventilsitzfläche durch die Schnittfläche der Verbindungsleitung gebildet wird.

Die Membran wird vorzugsweise an ihrem äußeren Rand eingeklemmt gehalten. Diese Halterung wird erleichtert, wenn die Membran auf ihrem äußeren Rand mit einem Ringwulst versehen wird und die Membran selbst sodann durch Einklemmen des Ringwulstes lösbar festgelegt wird.

Eine einfache Halterung für die Membran wird in diesem Falle dadurch vorgesehen, daß in dem Gehäuse eine erste Ringnut und in einem an dem Gehäuse lösbar befestigbaren Halterungsteil eine zweite Ringnut vorgesehen werden. Eine optimale Abdichtung der Membran sowie eine leichte Reinigungsmöglichkeit der Halterungsteile der Membran lassen sich dann erreichen, wenn die erste und zweite Ringnut in Form von V-förmigen Keilnuten ausgebildet sind. Hierdurch läßt sich eine stets optimale Membranlage ohne ein Verziehen erreichen.

Eine besonders vorteilhafte Ausbildung ergibt sich dadurch, daß das Halterungsteil einen einen Bajonettverschluß mit dem Gehäuse bildenden, den Zugang des Pulsationsmediums zu der Membran gestattenden Haltekopf sowie einen an dem Haltekopf um die Drehachse des Bajonettverschlusses drehbar gelagerten Ring, in dem die zweite Ringnut ausgebildet ist, umfaßt.

Um eine eventuelle Scherung der Membran beim Verschließen des Haltekopfes zu vermeiden, wird vorzugsweise eine Anordnung derart getroffen, daß der Ring in dem Gehäuse in Längsrichtung der Drehachse des Bajonettverschlusses verschiebbar jedoch unverdrehbar gehalten ist.

Um dem Melker beim Reinigen des Lufteinlaßventils eine Zerlegung des Ventils mit möglichst einfachen Mitteln, etwa eines Geldstückes, zu ermöglichen, wird gemäß einer weiteren Ausführungsform in dem Haltekopf auf dem der Membran abgewandten Seite entlang einem Durchmesser ein Schlitz zum Eingriff eines flachen Metallgegenstandes zum einfachen Verdrehen des Haltekopfes vorgesehen.

Um möglichst eine vollständige Zerlegung des Ventils mit möglichst wenigen Handgriffen zu erzielen wird vorzugsweise in dem Haltekopf eine mittige Öffnung vorgesehen, in die der mit dem Ventilteller in Eingriff stehende Stößel so weit vorsteht, daß beim Einführen eines flachen Metallgegenstandes in den Schlitz des Haltekopfes der Ventilteller über den Stößel aus seiner Schnapphalterung gelöst wird. Auf diese Weise kann etwa durch Einführen eines Geldstückes in den Schlitz des Haltekopfes bereits der Ventilteller aus seiner Schnapphalterung gelöst werden, während bei einer Verdrehung des Geldstückes sodann unmittelbar nachfolgend die Membran aus ihrer Halterung gelöst wird. Hierbei wird die Feder entweder von der Membran oder dem Unterteil weiterhin gehalten.

Im folgenden soll die Erfindung näher anhand eines in der Zeichnung dargestellten vorzugsweisen Ausführungsbeispiels erläutert werden. In der Zeichnung zeigen:

Figur 1   eine Darstellung des Vakuumverlaufs im Pulsraum und an der Zitzenspitze während zwei Pulszyklen (2 Sekunden). Die untere ausgezogene Kurve stellt den Fall dar, bei dem kein Lufteinlaß ins Melkzeug erfolgt und das Vakuum im Milchsammelbehälter bzw. in der Melkleitung konstant gehalten wird. Die gestrichelt gezeichnete Kurve zeigt in etwa den Verlauf bei Verwendung eines optimal gesteuerten Lufteinlaßventils.

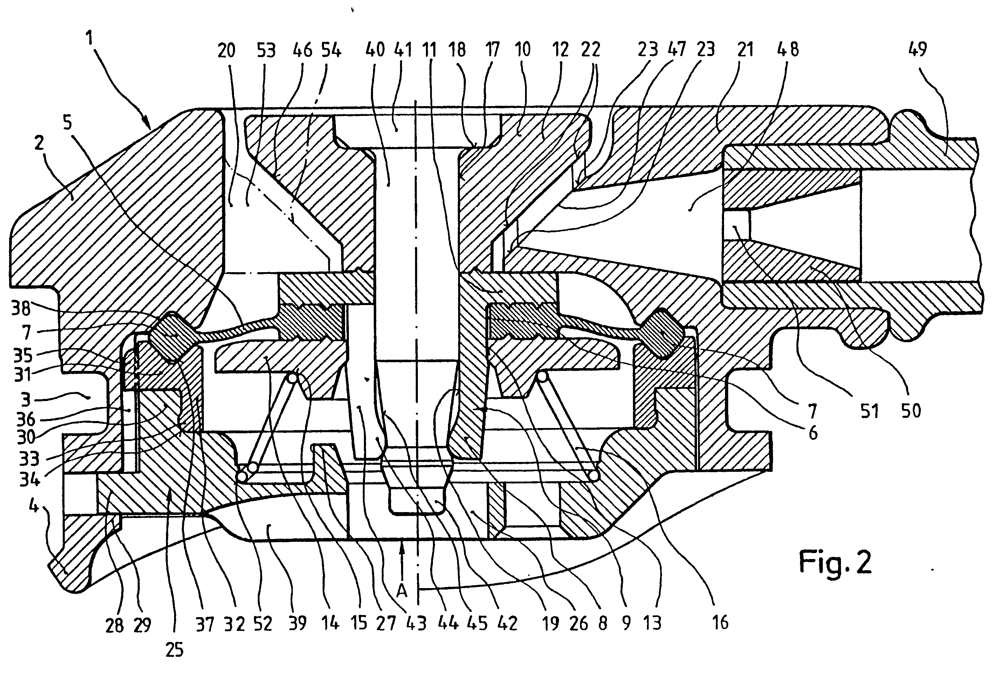

Figur 2   einen axialen Längsschnitt durch ein erfindungsgemäßes Lufteinlaßventil, wobei der Schnitt der linken Hälfte der Darstellung in einem Winkel von etwa 90° zu dem Schnitt in der rechten Hälfte der Darstellung verläuft.

In Figur 1, auf die bereits eingangs Bezug genommen wurde, ist in zwei übereinander angeordneten Darstellungen jeweils der Verlauf des Vakuums in bar in Abhängigkeit von der Zeit in Sekunden aufgezeichnet. In der oberen Darstellung ist der Verlauf des Vakuums im Pulsraum gezeigt. Bei dem Verlauf kann man vier Abschnitte, nämlich Abschnitt A = Entlüftungsphase (Evakuierungsphase), B = Vakuumphase, C = Belüftungsphase und D = Druckphase unterscheiden. Dabei ergeben A + B die Saugphase, während C + D die Entlastungsphase darstellen. In der unteren Darstellung ist in ausgezogener Linie der Verlauf des Melkvakuums an der Zitzenspitze dargestellt. Die bizarren und biotechnisch höchst unerwünschten zyklischen Schwankungen des Vakuums an der Zitzenspitze erklären sich aus dem durch die Pumpwirkung des Zitzengummis verursachten unkontrollierten Vor- und Rückwärtspendeln der Milchpfropfen im Melkzeug und dem damit verbundenen Wechselspiel zwischen kinetischer und potentieller Energie. Die strichpunktierte Linie K zeigt das im Standeimer konstant gehaltene Abführvakuum für die Milch aus den Melkbechern. Die gestrichelt gezeichnete Linie H zeigt schließlich den kontrollierten und biotechnisch erwünschten Verlauf des Melkvakuums an der Zitzenspitze bei Verwendung eines optimal gesteuerten Lufteinlaßventils. Die Punkte E und F in der oberen Kurve zeigen den Zeitpunkt an, zu dem das Lufteinlaßventil geöffnet wird bzw. den Zeitpunkt, zu dem das Lufteinlaßventil wieder geschlossen wird. Beide Punkte liegen in etwa kurz vor Erreichen des Atmosphärendrucks bzw. kurz nach Verlassen des Atmosphärendrucks. Gleichzeitig ist angedeutet, daß vorzugsweise das Lufteinlaßventil bei einem etwas niedrigeren Vakuum öffnet als schließt. Je exakter die Lage der Punkte bestimmt werden kann, an denen das Lufteinlaßventil öffnet bzw. schließt und je schlagartiger dieses Öffnen bzw. Schließen vor sich geht, um so genauer läßt sich die in der unteren Darstellung eingezeichnete gestrichelte Kurve erhalten, die das Melkvakuum an der Zitzenspitze unter Verwendung eines Lufteinlaßventils darstellt.

In Figur 2 ist mit 1 allgemein das Lufteinlaßventil bezeichnet, das in einem Gehäuse 2 ausgebildet ist. Dieses Gehäuse ist in eine entsprechend ausgeschnittene Öffnung in der Seitenwand einer Melkbecherhülse derart einsetzbar, daß das Gehäuse in Richtung des Pfeiles A in diese Öffnung eingesetzt wird. Dabei kommt ein in der Zeichnung nicht dargestellter O-Ring, der in die Nut 3 einlegbar ist, auf der Außenseite der Ventilaufnahme, in diesem Fall der Melkbecherhülse, zur Anlage, während die Nase 4 hinter der Öffnung in der Melkbecherhülse einrastet und die Innenwand der Melkbecherhülse hintergreift, um das Gehäuse fest an der Melkbecherhülse zu halten.

In dem Gehäuse ist eine Membran 5 angeordnet, die eine Mittelöffnung 6 aufweist und an ihrem äußeren Rand mit einem im Querschnitt quadratischen Ringwulst 7 versehen ist. Der Ringwulst könnte selbstverständlich auch einen anderen Querschnitt, etwa einen kreisförmigen Querschnitt, aufweisen. Durch die Mittelöffnung 6 der Membran erstreckt sich ein nabenförmiger Ansatz 8 einer allgemein mit 9 bezeichneten Schnapphalterung für einen Ventilteller 10. An dem einen Ende des nabenförmigen Ansatzes 8 ist ein ringförmiger Flansch 11 ausgebildet. Auf der Außenseite des nabenförmigen Ansatzes 8 ist eine leichte, ringförmige Nut 13 ausgebildet, die sich bis zu dem ringförmigen Flansch 11 erstreckt. Zur Befestigung der Membran 5 an der Schnapphalterung 9 ist die Membran mit ihrer Mittelöffnung 6 auf den nabenförmigen Ansatz 8 bis zur Anlage gegen den ringförmigen Flansch 11 aufgeschoben und sodann hier durch eine ringförmige Platte 14 festgelegt, die derart auf den nabenförmigen Ansatz 9 aufgezogen ist, daß sie fest in der ringförmigen Nut 13 sitzt und in dieser verkeilt ist. Die Membran wird damit fest zwischen dem ringförmigen Flansch 11 und der ringförmigen Platte 14 derart gehalten, daß die Öffnung 6 in der Membran nach dem Einsetzen eines noch weiter unten zu erläuternden Stößels in die Schnapphalterung gasdicht abgeschlossen ist.

An der ringförmigen Platte 14 ist auf der der Membran 5 abgewandten Seite ein ringförmiger Bund bzw. eine Rille 15 ausgebildet, die dazu dient, eine später noch näher zu beschreibende Schraubenfeder 16 zentriert zu halten.

Der Ventilteller ist in Form eines etwa kegelstumpfförmigen Teils 12 ausgebildet, das zur besseren Dichtfunktion etwa aus Gummi bestehen kann. Durch dieses kegelstumpfförmige Teil 12 ist eine zentrale axiale Längsbohrung 17 mit einer koaxialen Sackbohrung mit größerem Durchmesser 18 ausgebildet. Durch die Bohrungen 17 und 18 sowie eine in dem nabenförmigen Ansatz 8 ausgebildete koaxiale Bohrung 19 ist ein allgemein mit 40 bezeichneter Stößel eingesetzt, der in Form eines Bolzens ausgebildet ist. Der Bolzenkopf 41 kommt dabei in der Sackbohrung 18 des Ventiltellers 10 zu liegen. Das dem Pulsatorraum zugewandte Ende 42 des Stößels 40 ragt über den nabenförmigen Ansatz 9 hinaus. In dem nabenförmigen Ansatz 9 sind ein oder mehrere Schlitze ausgebildet, die in axialer Richtung verlaufen und bis zum Beginn des ringförmigen Flansches 11 reichen. Ein solcher axialer Schlitz 43 ist lediglich angedeutet und es können wie gesagt mehrere solcher Schlitze über den Umfang des nabenförmigen Ansatzes ausgebildet sein. Durch die Schlitze wird der nabenförmige Aufsatz in einen oder mehrere axial verlaufende Stege unterteilt, die eine größere Flexibilität für die weiter unten zu beschreibende Schnapphalterung gewähren. Auf der Innenseite des nabenförmigen Ansatzes ist ein in die Bohrung 19 vorstehender Ringwulst 44 ausgebildet. Dieser Ringwulst 44 greift im eingerasteten Zustand der Schnapphalterung 9 in eine ringförmige Aussparung 45 auf dem Stößel 40 ein.

Der Ventilteller 12 ist in der Zeichnung in seiner oberen Stellung gezeigt, in der der Raum 20 oberhalb der Membran 5 und der mit diesem Raum 20 in Verbindung stehende seitliche Rohransatzstutzen 21 mit der Atmosphäre in Verbindung stehen. In einer abgesenkten, in der Zeichnung nicht dargestellten Stellung, kommt eine ringförmige Fläche 22, deren Begrenzung in der Zeichnung im Schnitt durch die vier senkrechten Striche angedeutet ist, auf der kegelförmigen Fläche 46 des Ventiltellers auf einem Ventilsitz 23 zur Auflage, der durch die Begrenzungsfläche der Austrittsöffnung 47 der Verbindungsleitung 48, die in den Raum 20 mündet gebildet wird. Wenn der Ventilteller 10 in der Figur 2 nach abwärts bewegt wird, wird somit lediglich die Verbindungsleitung 48 von der Verbindung mit der Atmosphäre abgeschlossen, während der Raum 20 in dem Ventil weiter unter Atmosphärendruck bleibt.

Die Verbindungsleitung 48 ist über einen Schlauch oder ein Röhrchen 49, das mit seinem einen Ende in den Rohransatzstutzen 21 eingesteckt ist, mit vorzugsweise einem nicht gezeigten Schauglas verbunden, das etwa unterhalb des nicht dargestellten Melkbechers angeordnet ist, und durch das die aus der Zitze abgemolkene Milch in den Standeimer abtransportiert wird. Zur genauen Einstellung der während der Öffnung des Ventils 1 über die Verbindungsleitung 48 in die Milchabführleitung eingeführte Luftmenge ist in dem Schlauch 49 eine kalibrierte Drossel 50 angeordnet. Zur Herabsetzung der Geschwindigkeit der durch die engste Stelle 51 der Drossel strömenden Luft ist die Drossel in Form einer Venturi-Düse ausgebildet. Trotzdem sollte die Düse möglichst nahe an dem Ventil 2 angeordnet sein, damit die Geschwindigkeit der Luft möglichst weit herabgesetzt ist, bevor diese sich mit der abzuführenden Milch vereinigt. Dies kann für den Gehalt an freien Fettsäuren, d.h. für die Qualität der ermolkenen Milch von Bedeutung sein.

Die Membran 5 wird an ihrem äußeren Ende mit Hilfe des Ringwulstes 7 in dem Gehäuse 2 festgeklemmt. Hierzu ist ein allgemein mit 25 bezeichneter Haltekopf vorgesehen, der grob gesagt in Form einer topfförmigen Schale mit einer mittigen Öffnung 26 ausgebildet ist. Um die mittige Öffnung 26 sind mehrere, nach einwärts gegen die Membran 5 vorstehende Ansätze 27 angeformt, von denen lediglich einer dargestellt ist. Die Außenseite dieser Ansätze 27 dient vorzugsweise zur koaxialen Führung der bereits erwähnten Schraubenfeder 16. In der Figur 2 ist jedoch eine andere Halterung einer etwa kegelförmig gewickelten Schraubenfeder 16 dargestellt, deren von der Membran 5 abgewandtes Ende in einer Ringnut 52 gehalten ist, die in dem Boden des topfförmigen Haltekopfes ausgebildet ist.

Der Haltekopf ist bei dem vorliegenden Ausführungsbeispiel in Form eines Bajonettverschlusses ausgebildet. Zu diesem Zweck sind an dem Haltekopf 25 radial nach außen vorstehende Lappen 28 angeformt, von denen lediglich einer in der Zeichnung dargestellt ist. Diese Lappen 28 können in der Verschlußstellung des Haltekopfes 25 Vorsprünge 29, die in dem Gehäuse 2 ausgebildet sind, hintergreifen. Selbstverständlich könnte der Haltekopf auch mit einem Außengewinde versehen sein, das in ein entsprechendes Innengewinde des Gehäuses 2 eingreift.

Auf dem der Membran 5 zugewandten Rand 30 des Haltekopfes 25 sitzt ein Ring 31, der einen von der Membran 5 abgewandten ringförmigen Ansatzstutzen 32 besitzt, der auf seiner, der Innenseite des Haltekopfes 25 zugewandten Seite eine rippenförmige Verdickung 33 aufweist, die in eine entsprechende Auskehlung 34 auf der Innenseite des Haltekopfes 25 eingreift. Auf diese Weise wird der Ring 31 drehbar in Bezug auf den Haltekopf an diesem auf seinem oberen Rand 30 gehalten. Der Ring 31 weist auf seiner Außenseite eine oder ggf. mehrere in Längsrichtung verlaufende fahnenartige Vorsprünge 35 auf, die in entsprechenden Schlitzen 36, die in der Innenwand des Gehäuses 2 ausgebildet sind, geführt sind, so daß der Ring 31 nicht um seine Symmetrieachse drehbar, sondern lediglich parallel zu seiner Symmetrieachse in dem Gehäuse 2 verschiebbar gelagert ist.

In dem Ring 31 ist eine im Querschnitt V-förmige ringförmige Keilnut 37 ausgebildet, in der der Ringwulst 7 der Membran 5 liegt. Eine zu dieser ersten Keilnut entgegengesetzte entsprechende ringförmige Keilnut 38 ist in dem Gehäuse 2 ausgeformt. Zwischen diesen beiden Keilnuten 37 und 38 wird der Ringwulst 7 der Membran 5 gehalten.

Zum leichten Öffnen und Verschließen des Haltekopfes 25 etwa mit Hilfe einer Münze, ist auf der der Membran 5 abgewandten Seite des Haltekopfes auf einem Durchmesser des Haltekopfes ein Schlitz 39 ausgefräst, von dem in der Zeichnung, aufgrund des um 90° verdrehten Schnittes, auf der rechten Seite der Zeichnung, lediglich der auf der linken Seite des Haltekopfes ausgebildete Teil ersichtlich ist.

Das Ende 42 des Stößels 40 steht so weit in die Bahn des Schlitzes 39 vor, daß beim Einsetzen einer Münze in diesen Schlitz ein Druck auf dieses Ende 42 des Stößels derart ausgeübt werden kann, daß dieser nach aufwärts gedrückt wird und hierbei aus seiner Einraststellung mit der Schnapphalterung 9 freigegeben wird.

Das Auseinandernehmen des Lufteinlaßventils zum Zwecke der Reinigung kann wie folgt erfolgen. Ausgehend von dem in der Zeichnung dargestellten zusammengebauten Zustand des Ventils kann durch einen Druck auf das untere Ende 42 des Stößels 40 ein solcher Druck nach aufwärts auf den Ventilteller 10 ausgeübt werden, daß der Stößel mit dem daran gehalterten Ventilteller aus seiner Rasterung mit der Schnapphalterung 9 ausrastet. Der Stößel 40 und der Ventilteller 10 können sodann nach aufwärts herausgehoben werden. Hierdurch werden der Raum 20 oberhalb der Membran 5 wie auch die Verbindungsleitung 48 mit dem Rohransatzstutzen 21 von der Innenseite des Gehäuses her frei zugänglich, so daß eine gründliche Reinigung des mit der Atmosphäre in Verbindung stehenden Teils des Lufteinlaßventils durchgeführt werden kann.

Soll das gesamte Ventil auseinandergenommen werden, so kann man durch Einführen etwa einer Münze in den Schlitz 39 den gesamten Haltekopf 25 derart um die Symmetrieachse verdrehen, daß die Lappen 28 hinter den Vorsprüngen 29 frei kommen. Bei der Verdrehung des Haltekopfes wird dieser gegenüber dem Gehäuse und dem Ring 31 verdreht. Der Ring 31 dagegen wird aufgrund seiner fahnenartigen Ansätze 39 nicht mitgedreht, wodurch erreicht wird, daß auf die Membran 5 keine Scherkräf te ausgeübt werden. Sobald die Lappen 28 des Haltekopfes 25 hinter den Vorsprüngen 29 freigekommen sind, kann der gesamte Haltekopf zusammen mit dem daran hängenden Ring 31 nach abwärts aus dem Gehäuse herausgenommen werden, wobei die fahnenartigen Vorsprünge 35 des Ringes 31 in den Schlitzen 36 nach abwärts gleiten. Hierdurch wird auch der Ringwulst 7 der Membran freigegeben, an dem die Membran in dem Gehäuse 2 insgesamt gehalten ist. Zusammen mit der Membran 5 können sodann die Schnapphalterung 9 sowie die ringförmige Platte 14 aus dem Gehäuse herausgenommen werden, die miteinander verkeilt bleiben und zwischen sich die Membran halten.

Der Zusammenbau des Lufteinlaßventils nach der vollständigen Reinigung erfolgt in genau der umgekehrten Reihenfolge.

Die Ausbildung des Ventils wird vorzugsweise derart getroffen, daß die Drossel 50 möglichst nahe an der Austrittsöffnung 47 der Verbindlungsleitung 48 zu liegen kommt. In diesem Falle wird der zwischen dieser Öffnung und der Drossel liegende Raum der Verbindungsleitung 48 möglichst klein.

Damit der Ventilteller 10 nicht nur punktförmig an einem Ventilsitz zur Anlage kommt, was ggf. zu unerwünschten Verkantungen führen könnte, werden vorzugsweise in dem Ventilraum 20 noch ein oder zwei in Axialrichtung verlaufende Stege vorgesehen, von denen lediglich ein Steg 53 in gestrichelter Form dargestellt ist, gegen deren Auflagefläche 54 die Fläche 46 des Ventiltellers 10 zur Auflage kommt.

**Patentansprüche**

1. Lufteinlaßventil (1) für den Einlaß von Luft in die Milchabführleitung eines Melkbechers oder Sammelstückes, mit einem an dem Melkbecher oder Sammelstück befestigten Gehäuse (2), in dem eine Membran (5) eingespannt ist, an der ein nach einer Seite der Membran vorstehender Ventilteller (10) befestigt ist, der mit einem Ventilsitz (23) ein Ventil bildet, das in Abhängigkeit von dem auf der anderen Seite der Membran anliegenden Pulsatordruck periodisch öffnet und schließt, um im geöffneten Zustand über eine Verbindungsleitung (48) atmosphärische Luft in die Milchabführleitung, insbesondere in den Innenraum eines Zitzengummis, einzuleiten, dadurch gekennzeichnet, daß die Verbindungsleitung (48) in die Ventilsitzfläche (23) mündet.

2. Ventil nach Anspruch 1, dadurch gekennzeichnet, daß der Ventilteller (10) lösbar in der Membran (5) gehaltert ist.

3. Ventil nach Anspruch 2, dadurch gekennzeichnet, daß der Ventilteller (10) lösbar in einer an der Membran (5) befestigten Schnapphalterung gehalten ist.

4. Ventil nach Anspruch 3, dadurch gekennzeichnet, daß die Schnapphalterung (9) die Membran (5) durchsetzt, daß in der Schnapphalterung eine Durchgangsöffnung (19) ausgebildet ist, und daß ein mit dem Ventilteller (10) in Verbindung stehender Stößel (40) durch die Schnapphalterung (9) auf die dem Pulsatorraum zugewandte Seite der Membran (5) vorsteht.

5. Ventil nach Anspruch 4, dadurch gekennzeichnet, daß an dem Stößel (40) ein ringförmiger Einschnitt (45) ausgebilet ist, in den im eingerasteten Zustand ein ringförmiger Vorsprung (44) auf der Innenseite der Durchgangsöffnung (19) der Schnapphalterung eingreift.

6. Ventil nach Anspruch 5, dadurch gekennzeichnet, daß ein auf die Seite des Pulsatorraumes vorstehender nabenförmiger Teil (8) der Schnapphalterung (9) zur Erhöhung der Flexibilität ein oder mehrere, in axialer Richtung verlaufende Schlitze (43) aufweist.

7. Ventil nach einem der Ansprüche 1 bis 6, dadurch gekennieichnet, daß der Ventilteller (10) durch ein im wesentlichen kegelstumpfförmiges Teil (12) gebildet wird, das axial von dem in Form eines Bolzens ausgebildeten Stößels (40) durchsetzt ist.

8. Ventil nach einem der Ansprüche 1 bis 7, dadurch gekennzeichnet, daß der Ventilteller (10) aus einem Gummi besteht.

9. Ventil nach einem der Ansprüche 1 bis 8, dadurch gekennzeichnet, daß die Ventilsitzfläche (23) durch die Schnittfläche der Verbindungsleitung (48) gebildet wird.

10. Ventil nach einem der Ansprüche 1 bis 9, dadurch gekennzeichnet, daß die Membran (5) an ihrem äußeren Rand eingeklemmt gehalten ist.

11. Ventil nach Anspruch 10, dadurch gekennzeichnet, daß die Membran (5) auf ihrem äußeren Rand einen Ringwulst (7) aufweist und daß die Membran durch Einklemmen des Ringwulstes lösbar im Gehäuse (2) gehaltert ist

12. Ventil nach einem der Ansprüche 10 oder 11, dadurch gekennzeichnet, daß zur Halterung der Membran (5) in dem Gehäuse (2) eine erste Ringnut (38) und in einem an dem Gehäuse (2) lösbar befestigbaren Halterungsteil (25, 31) eine zweite Ringnut (37) ausgebildet sind.

13. Ventil nach Anspruch 12, <u>dadurch gekennzeichnet</u>, daß die erste und zweite Ringnut (37, 38) in Form von V-förmigen Keilnuten ausgebildet sind.

14. Ventil nach Anspruch 12 oder 13, <u>dadurch gekennzeichnet</u>, daß das Halterungsteil einen einen Bajonettverschluß mit dem Gehäuse bildenden, den Zugang des Pulsationsmediums zu der Membran (5) gestattenden Haltekopf (25) sowie einen an dem Haltekopf und die Drehachse des Bajonettverschlusses drehbar gelagerten Ring (31), in dem die zweite Ringnut (37) ausgebildet ist, umfaßt.

15. Ventil nach Anspruch 14, <u>dadurch gekennzeichnet</u>, daß der Ring (31) in dem Gehäuse (2) in Längsrichtung der Drehachse des Bajonettverschlusses verschiebbar, jedoch unverdrehbar gehaltert ist.

16. Ventil nach Anspruch 14 oder 15, <u>dadurch gekennzeichnet</u>, daß in dem Haltekopf (25) auf der der Membran (5) zugewandten Seite entlang einem Durchmesser ein Schlitz (39) zum Eingriff eines flachen Metallgegenstandes zum einfachen Verdrehen des Haltekopfes vorgesehen ist.

17. Ventil nach Anspruch 16, <u>dadurch gekennzeichnet</u>, daß in dem Haltekopf (25) eine mittige Öffnung (26) vorgesehen ist, in die der mit dem Ventilteller (10) in Eingriff stehende Stößel (40) so weit vorsteht, daß beim Einführen eines flachen Metallgegenstandes in den Schlitz des Haltekopfes der Ventilteller (10) über den Stößel aus seiner Schnapphalterung (9) gelöst wird.

**Claims**

1. An air inlet valve (1) for admitting air to the milk line of a teat cup or a milk claw, comprising a housing (2) which is secured to the teat cup or milk claw and in which a diaphragm (5) is clamped, on which there is secured a valve disc (10) which projects to one side of the diaphragm and which cooperates with a valve seat (23) to form a valve which periodically opens and closes in dependence on the pulsator pressure applied to the other side of the diaphragm, in order, when in the open condition, to introduce atmospheric air via a connecting line (48) into the milk line, more particularly to the interior of a teat rubber, characterised in that the connecting line (48) leads into the valve seat surface (23).

2. A valve according to claim 1, characterised in that the valve disc (10) is mounted detachably at the diaphragm (5).

3. A valve according to claim 2, characterised in that the valve disc (10) is mounted detachably in a snap mounting (10) secured to the diaphragm (5).

4. A valve according to claim 3, characterised in that the snap mounting (9) extends through the diaphragm (5), in that a passage aperture (19) is formed in the snap mounting, and in that a push rod (40) connected to the valve disc (10) projects through the snap mounting (9) on to the side of the diaphragm (5) facing the pulsator chamber.

5. A valve according to claim 4, characterised in that the push rod (40) is formed with an annular incision (45) in which, in the engaged state, an annular projection (44) on the inside of the passage aperture (19) of the snap mounting engages.

6. A valve according to claim 5, characterised in that a hub-shaped part (8) of the snap mounting (9) projecting on to the pulsator chamber side has one or more axial slots (43) to increase flexibility.

7. A valve according to any one of claims 1 to 6, characterised in that the valve disc (10) is formed by a substantial frusto-conical part (12) through which the push rod (40) constructed in the form of a pin extends axially.

8. A valve according to any one of claims 1 to 7, characterised in that the valve disc (10) consists of a rubber.

9. A valve according to any one of claims 1 to 8, characterised in that the valve seat surface (23) is formed by the interface of the connecting line (48).

10. A valve according to any one of claims 1 to 9, characterised in that the diaphragm (5) is mounted by being clamped at its outer edge.

11. A valve according to claim 10, characterised in that the diaphragm (5) has an annular bead (7) on its outer edge and in that the diaphragm is mounted detachably in the housing (2) by clamping of the annular bead.

12. A valve according to claim 10 or 11, characterised in that to mount the diaphragm (5) a first annular groove (38) is formed in the housing (2) and a second annular groove (37) is formed in a mounting part (25, 31) adapted to be detachably secured on the housing (2).

13. A valve according to claim 12, characterised in that the first and second annular grooves (37, 38) are constructed in the form of V-shaped keyways.

14. A valve according to claim 12 or 13, characterised in that the mounting part comprises a retaining head (25) which forms a bayonet closure with the housing and which allows access of the pulsation medium to the diaphragm (5), and a ring (31) which is mounted rotatably on the retaining head and the axis of rotation of the bayonet closure, and in which the second annular groove (37) is formed.

15. A valve according to claim 14, characterised in that the ring (31) is mounted in the housing (2) for displacement in the longitudinal direction of the axis of rotation of the bayonet closure but non-rotatably.

16. A valve according to claim 14, or 15, characterised in that a slot (39) is provided along one diameter in the retaining head (25) on the side facing the diaphragm (5) for engagement of a flat metal article for simple turning of the retaining head.

17. A valve according to claim 16, characterised in that the retaining head (25) is formed with a central aperture (26) into which the push rod (40) engaging the valve disc (10) projects to such an extent that when a flat metal article is introduced into the retaining head slot the valve disc (10) is released from its snap mounting (9) by way of the push rod.

**Revendications**

1. Soupape d'entrée d'air (1) destinée à introduire de l'air dans le tuyau à lait d'un gobelet trayeur ou d'un collecteur, comprenant un boîtier (2) qui' est fixé sur le gobelet trayeur ou sur le collecteur et dans lequel est monté un diaphragme (5) sur lequel est fixée une cuvette de soupape (10) qui fait saillie vers un côté du diaphragme et forme avec le siège de soupape (23) une soupape qui, en fonction de la pression du pulsateur appliquée de l'autre côté du diaphragme, s'ouvre et se, ferme périodiquement afin, lorsqu'elle est ouverte, d'introduire de l'air atmosphérique dans le tuyau à lait par l'intermédiaire d'un tuyau de liaison (48), en particulier dans l'espace intérieur d'un caoutchouc de trayon, caractérisée en ce que le tuyau de liaison (48) débouche dans la surface du siège de soupape (23).

2. Soupape selon la revendication 1, caractérisée en ce que la cuvette de soupape (10) est maintenue de manière amovible sur le diaphragme (5).

3. Soupape selon la revendication 2, caractérisée en ce que la cuvette de soupape (10) est maintenue de manière amovible dans un support encliquetable fixé sur le diaphragme (5).

4. Soupape selon la revendication 3, caractérisée en ce que le support encliquetable (9) traverse le diaphragme (5), en ce qu'une ouverture de passage (19) est réalisée dans le support encliquetable et en ce qu'un poussoir (40) communiquant avec la cuvette de soupape (10) fait saillie à travers le support encliquetable (9) du côté du diaphragme (5) qui est tourné vers l'espace du pulsateur.

5. Soupape selon la revendication 4, caractérisée en ce qu'il est réalisé sur le poussoir (40) une encoche annulaire (45) dans laquelle s'engage dans la position d'encliquetage, une saillie annulaire (44) réalisée sur le côté intérieur de l'ouverture de passage (19) du support encliquetable.

6. Soupape selon la revendication 5, caractérisée en ce qu'une pièce en forme de moyeu (8) du support encliquetable (9) faisant saillie du côté de l'espace du pulsateur présente, afin d'accroître la flexibilité, une ou plusieurs fentes (43) s'étendant en direction axiale.

7. Soupape selon l'une des revendications 1 à 6, caractérisée en ce que la cuvette de soupape (10) est formée par une pièce (12) pour l'essentiel en forme de cône tronqué qui est traversée axialement par le poussoir (40) réalisé sous la forme d'un boulon.

8. Soupape selon l'une des revendications 1 à 7, caractérisée en ce que la cuvette de soupape (10) est en caoutchouc.

9. Soupape selon l'une, des revendications 1 à 8, caractérisée en ce que, la surface du siège de soupape (23) est formée par le plan de section du tuyau de liaison (48).

10. Soupape selon l'une des revendications 1 à 9, caractérisée en ce que le diaphragme (5) est maintenu en étant collé par son bord extérieur.

11. Soupape selon la revendication 10, caractérisée en ce que le diaphragme (5) présente un renflement annulaire (7) sur son bord extérieur et en ce que le diaphragme est maintenu amovible dans le boîtier (2) par collage du renflement annulaire.

12. Soupape selon l'une des revendications 10 ou 11, caractérisée en ce que pour maintenir le diaphragme (5), une première encoche annulaire (38) est réalisée dans le boîtier (2) et une deuxième encoche annulaire (37) est réalisée dans une pièce de support (25, 31) pouvant être fixée de manière amovible sur le boîtier (2).

13. Soupape selon la revendication 12, caractérisée en ce que la première et la deuxième encoche annulaire (37, 38) sont réalisées sous forme d'encoches de clavetage en V.

14. Soupape selon la revendication 12 ou 13, caractérisée en ce que la pièce de support comprend une tête de maintien (25) formant un joint à baïonnette avec le boîtier et autorisant l'accès du fluide de pulsation au diaphragme (5) ainsi qu'une bague (31) qui est montée mobile en rotation sur la tête de maintien et sur l'axe de rotation du joint à baïonnette et dans laquelle est réalisée la deuxième encoche annulaire (37).

15. Soupape selon la revendication 14, caractérisée en ce que la bague (31) est maintenue dans le boîtier (2) de manière à pouvoir être déplacée dans la direction longitudinale de l'axe de rotation du joint à baïonnette mais à ne pas pouvoir effectuer de rotation.

16. Soupape selon la revendication 14 ou 15, caractérisée en ce qu'il est prévu dans la tête de maintien (25), du côté tourné vers le diaphragme (5), le long d'un diamètre, une fente (39) prévue pour y engager un objet métallique plat afin de faire tourner facilement la tête de maintien.

17. Soupape selon la revendication 16, caractérisée en ce qu'il est prévu dans la tête de maintien (25) une ouverture centrale (26) dans laquelle le poussoir engagé avec la cuvette de soupape (10) fait saillie de telle sorte que lors de l'introduction d'un objet métallique plat dans la fente de la tête de maintien, la cuvette de soupape (10) soit libérée de son support encliquetable (9) par l'intermédiaire du poussoir.

Fig.1

Fig. 2

EP 0 131 646 B1